(19) Europäisches Patentamt
European Patent Office
Office européen des brevets

(11) **EP 1 620 749 B1**

(12) **FASCICULE DE BREVET EUROPEEN**

(45) Date de publication et mention
de la délivrance du brevet:
**24.02.2010 Bulletin 2010/08**

(21) Numéro de dépôt: **04742298.5**

(22) Date de dépôt: **19.03.2004**

(51) Int Cl.:
***G01S 15/89*** *(2006.01)*

(86) Numéro de dépôt international:
**PCT/FR2004/000684**

(87) Numéro de publication internationale:
**WO 2004/086557 (07.10.2004 Gazette 2004/41)**

(54) **PROCÉDÉ POUR DÉTERMINER DES RÉPONSES IMPULSIONNELLES D'UN MILIEU VIS-À-VIS DE LA TRANSMISSION D'ONDES ENTRE DIFFÉRENTS POINTS**

VERFAHREN ZUR BESTIMMUNG VON IMPULSANTWORTEN VON EINEM MEDIUM IN BEZUG AUF DIE ÜBERTRAGUNG VON WELLEN ZWISCHEN VERSCHIEDENEN PUNKTEN

METHOD OF DETERMINING IMPULSE RESPONSES FROM A MEDIUM IN RELATION TO THE TRANSMISSION OF WAVES BETWEEN DIFFERENT POINTS

(84) Etats contractants désignés:
**AT BE BG CH CY CZ DE DK EE ES FI FR GB GR HU IE IT LI LU MC NL PL PT RO SE SI SK TR**

(30) Priorité: **24.03.2003 FR 0303545**

(43) Date de publication de la demande:
**01.02.2006 Bulletin 2006/05**

(73) Titulaires:
• **CENTRE NATIONAL DE LA RECHERCHE SCIENTIFIQUE (CNRS)**
**75794 Paris Cedex 16 (FR)**
• **Universite Paris 7-Denis Diderot**
**75251 Paris Cedex 05 (FR)**

(72) Inventeurs:
• **FINK, Matthias**
**F-92190 Meudon (FR)**
• **DE LA GORGUE DE ROSNY, Julien**
**F-75012 Paris (FR)**

• **JULIA, Claire**
**F-75006 Paris (FR)**
• **FOLEGOT, Thomas**
**F-29200 Brest (FR)**

(74) Mandataire: **Burbaud, Eric**
**Cabinet Plasseraud**
**52 rue de la Victoire**
**75440 Paris Cedex 09 (FR)**

(56) Documents cités:
**WO-A-02/32316      US-A- 4 167 879**
**US-A- 4 456 982**

• **PRADA C ET AL: "Flaw detection in solid with the D.O.R.T. method" ULTRASONICS SYMPOSIUM, 1997. PROCEEDINGS., 1997 IEEE TORONTO, ONT., CANADA 5-8 OCT. 1997, NEW YORK, NY, USA,IEEE, US, 5 octobre 1997 (1997-10-05), pages 679-683, XP010271333 ISBN: 0-7803-4153-8**

# Description

La présente invention est relative aux procédés pour déterminer des réponses impulsionnelles d'un milieu vis-à-vis de la transmission d'ondes entre différents points.

Plus particulièrement, l'invention concerne un procédé pour déterminer des réponses impulsionnelles d'un milieu vis-à-vis de la transmission d'ondes entre différents points, procédé comprenant :

(a) au moins une étape d'émission au cours de laquelle on émet des ondes dans le milieu en générant des signaux ei(t) à partir d'un nombre N de points d'émission appartenant au milieu, où N est un nombre entier au moins égal à 2 et i est un indice compris entre 1 et N qui désigne l'un desdits N points d'émission,

(b) au moins une étape de réception au cours de laquelle on capte des signaux rj(t) à partir desdites ondes après transmission dans ledit milieu, en un nombre M de points de réception appartenant au milieu (ces points de réception peuvent être confondus avec les points d'émission), où M est un entier naturel non nul et j est un indice compris entre 1 et M qui désigne l'un desdits M points de réception,

(c) et au moins une étape de détermination desdites réponses impulsionnelles hij(t) entre chaque point d'émission i et chaque point de réception j à partir des signaux émis ei(t) et captés rj(t).

Les réponses impulsionnelles peuvent être déterminées aux fins de focalisation d'ondes dans le milieu, par exemple aux fins d'imagerie du milieu ou de communication sélective entre différents points du milieu, notamment dans le cadre de la mise en oeuvre de la méthode "D.O.R.T." (Décomposition de l'Opérateur Retournement Temporel) décrite notamment par Prada et al. (C. Prada and M. Fink, "Eigenmodes of the time reversal operator: a solution to selective focusing in multiple-target media." Wave Motion, 20, pp 151-163 (1994)).

Le processus d'acquisition des réponses impulsionnelles entre les points en question du milieu est toutefois relativement lent, dans la mesure où il est effectué séquentiellement, pour les différents points d'émission i les uns à la suite des autres, comme décrit par exemple dans le document WO-A-02/32 316 dans le cadre d'un procédé de focalisation d'ondes acoustiques autre que la méthode "D.O.R.T." susmentionnée.

Cette lenteur allonge le temps de mise en oeuvre du procédé, et lorsque le milieu est changeant, elle ne permet pas d'obtenir les réponses impulsionnelles assez vite pour pouvoir être valablement utilisées ensuite dans ce milieu.

La présente invention a notamment pour but de pallier ces inconvénients.

A cet effet, selon l'invention, un procédé du genre en question est **caractérisé en ce qu**'au cours de l'étape (a), on fait émettre simultanément les signaux ei (t) par lesdits N points d'émission, ces signaux ei(t) ayant une durée T et étant chacun une somme de n signaux élémentaires sensiblement monochromatiques, de même amplitude et de fréquences respectives $f_{0,i}$+k.$\delta$f , où $f_{0,i}$ est une fréquence prédéterminée propre au point i, k est un nombre entier compris entre 0 et n, n est un nombre entier au moins égal à 2 et $\delta$f est un pas fréquentiel prédéterminé, les fréquences $f_{0,i}$ respectives propres aux différents points i étant distinctes les unes des autres et comprises dans une bande de fréquences de largeur $\delta$f, et en ce qu'au cours de l'étape (c), on calcule chaque réponse impulsionnelle hij(t) à partir d'un signal de corrélation entre le signal ei(t) émis au point i et le signal rj (t) capté au point j.

Grâce à ces dispositions, on calcule simultanément les réponses impulsionnelles entre N points d'émission et M points de réception (éventuellement confondus avec les points d'émission), ce qui accélère le processus d'acquisition des réponses impulsionnelles.

Dans divers modes de réalisation du procédé selon l'invention, on peut éventuellement avoir recours en outre à l'une et/ou à l'autre des dispositions suivantes :

- les fréquences $f_{0,i}$ respectives propres aux différents points i sont séparées deux à deux par un écart $\delta$f/N ;
- au cours de l'étape (c), ledit signal de corrélation est fenêtré au moyen d'une fonction porte n(t) de largeur 1/$\delta$f ;
- au cours de l'étape (c), les réponses impulsionnelles hij(t) sont déterminées par la formule :

$$hij(t) = \Pi(t).\int ei(\theta - t).rj(\theta)d\theta \quad ;$$

- les ondes transmises dans le milieu entre les points d'émission et les points de réception sont des ondes acoustiques ;
- au cours de l'étape (a), le milieu où sont émises les ondes est réverbérant ;
- le pas fréquentiel $\delta$f est inférieur ou égal à 1/$\tau$, où $\tau$ est la dispersion temporelle du milieu (c'est-à-dire la durée du signal capté après émission d'un signal impulsionnel dans le milieu) ;
- le pas fréquentiel $\delta$f est sensiblement égal à 1/$\tau$, où $\tau$ est la dispersion temporelle du milieu ;
- la durée T est au moins égale à N/$\delta$f ;
- la durée T est au moins égale à N.$\tau$, où $\tau$ est la dispersion temporelle du milieu ;
- les signaux élémentaires présentent des phases aléatoires ;
- les ondes sont émises avec une certaine bande passante, les fréquences f0i comprennent une fréquence minimale f0 et le nombre n est déterminé pour que la bande de fréquence comprise entre f0 et f0+ [(n+1).$\delta$f] recouvre sensiblement ladite bande passante ;

- les points de réception sont confondus avec les points d'émission.

D'autres caractéristiques et avantages de l'invention apparaîtront au cours de la description suivante de deux de ses modes de réalisation, donnés à titre d'exemples non limitatifs, en regard des dessins joints.

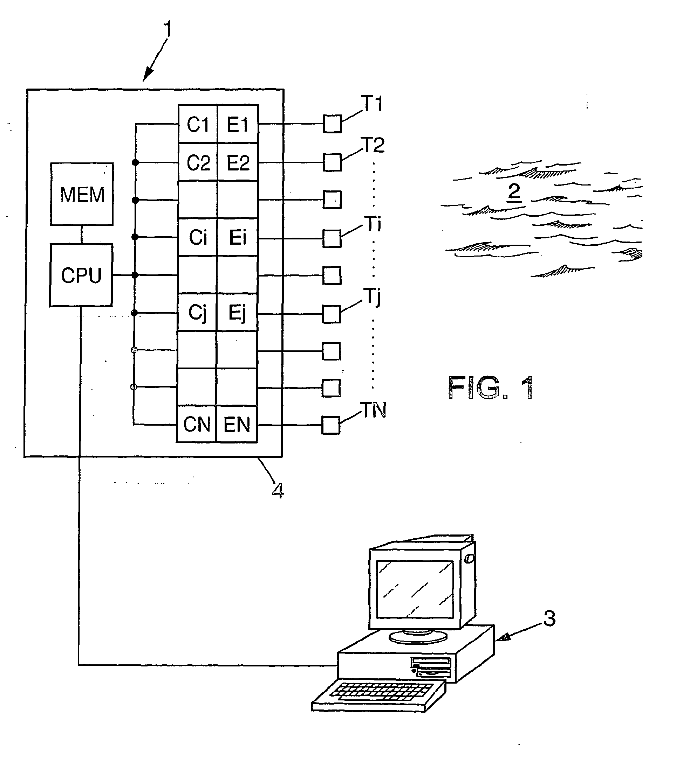

Sur le dessin, la figure 1 est une vue schématique d'un dispositif adapté pour mettre en oeuvre la présente invention, dans un mode de réalisation.

Dans l'exemple non limitatif représenté sur le dessin, le procédé selon un mode de réalisation de l'invention est mis en oeuvre par un dispositif 1 qui est adapté pour émettre et recevoir des ondes dans un milieu 2 homogène ou non, généralement réverbérant, qui peut être solide, liquide ou gazeux. Les ondes en question sont de préférence acoustiques et la description ci-après ne fera référence qu'à de telles ondes acoustiques, mais lesdites ondes pourraient éventuellement être d'une autre nature, par exemple de nature électromagnétique.

Le dispositif 1 comporte par exemple un ordinateur 3, ou tout autre dispositif de commande similaire, qui commande les émissions d'ondes acoustiques et leur écoute dans le milieu 2. A cet effet, l'ordinateur 3 peut par exemple commander un dispositif électronique dédié 4 qui peut notamment comporter une unité centrale électronique CPU associée à une mémoire centrale MEM, cette unité centrale CPU commandant elle-même N voies (N étant un entier au moins égal à 2) reliées chacune à un transducteur T1-TN permettant d'émettre et de capter des signaux acoustiques dans le milieu 2. Toutes les voies sont synchronisées entre elles.

Chaque voie de mesure du dispositif 4 peut comporter par exemple un échantillonneur E1-EN relié au transducteur correspondant T1-TN, et chaque échantillonneur peut être lui-même relié à une mémoire associée à une unité centrale, référencées conjointement C1-CN.

Le dispositif 1 peut être utilisé notamment aux fins d'imagerie du milieu 2, ou encore pour établir une communication sélective avec un point dudit milieu, ou autre, par exemple en utilisant la méthode "D.O.R.T." (Décomposition de l'Opérateur Retournement Temporel) décrite notamment par Prada et al. (C. Prada and M. Fink, "Eigenmodes of the time reversal operator: a solution to sélective focusing in multiple-target media." Wave Motion, 20, pp 151-163 (1994)).

Dans tous les cas, il est nécessaire de déterminer les réponses impulsionnelles entre les transducteurs T1-TN.

A cet effet, l'ordinateur 3 commande le dispositif 1 de façon qu'il suive successivement les étapes suivantes :

(a) au moins une étape d'émission au cours de laquelle on émet des ondes dans le milieu en générant des signaux ei(t) à partir des N transducteurs T1-TN (ces N transducteurs peuvent le cas échéant ne constituer qu'une partie des transducteurs reliés au dispositif 4, auquel cas les réponses impulsionnelles relatives à l'ensemble des transducteurs seraient acquises en plusieurs passes successives, ces passes restant toutefois en nombre très inférieur au nombre total de transducteurs), i étant un indice compris entre 1 et N qui désigne l'un desdits N transducteurs ;

(b) au moins une étape de réception au cours de laquelle les N transducteurs T1-TN captent des signaux rj(t) à partir desdites ondes après transmission dans ledit milieu, où j est un indice compris entre 1 et N désignant l'un desdits transducteurs ;

(c) et au moins une étape de détermination desdites réponses impulsionnelles hij(t) entre chaque point d'émission i et chaque point de réception j à partir des signaux émis ei(t) et captés rj(t).

Pour permettre d'acquérir en une seule fois tous les signaux nécessaires à la détermination des réponses impulsionnelles concernant les N transducteurs susmentionnés (c'est-à-dire tout ou partie des transducteurs reliés au dispositif 4, comme expliqué ci-dessus), tous les signaux ei(t) sont émis simultanément au cours de l'étape (a) par les N transducteurs, mais ces signaux émis sont orthogonaux entre eux de façon que les informations propres à chaque point d'émission puissent ensuite être séparées les unes des autres dans les signaux captés rj(t).

Ainsi, chaque signal émis ei(t) est égal à la somme de n signaux élémentaires sensiblement monochromatiques, de même amplitude et de fréquences respectives $f_{0,i}+k.\delta f$ , où :

- $f_{0,i}$ est une fréquence prédéterminée propre au transducteur i,
- k est un nombre entier compris entre 0 et n,
- n est un nombre entier au moins égal à 2,
- et $\delta f$ est un pas fréquentiel prédéterminé, avantageusement inférieur ou égal à $1/\tau$ et de préférence sensiblement égal à $1/\tau$, où $\tau$ est une valeur moyenne de la dispersion temporelle du milieu 2, c'est-à-dire la durée du signal capté après émission d'un signal impulsionnel (fonction de Dirac) dans le milieu 2.

Les fréquences $f_{0,i}$ respectives propres aux différents points i sont distinctes les unes des autres et comprises dans une bande de fréquences de largeur $\delta f$ : avantageusement, ces fréquences $f_{0,i}$ sont séparées deux à deux par un écart $\delta f/N$.

De plus, si BP est la bande passante avec laquelle les ondes acoustiques sont émises et reçues par les transducteurs, et si on nomme f0 la plus faible des fréquences f0i, alors f0 et n peuvent avantageusement être déterminés pour que la bande des fréquences des signaux élémentaires (bande comprise entre f0 et f0+[(n+1).δf]) recouvre sensiblement ladite bande passante.

Avantageusement, les signaux élémentaires composant les signaux ei(t) présentent des phases aléatoires.

Tous les signaux ei(t) ont une même durée T, qui est avantageusement au moins égale à N/δf, et de préférence au moins égale à N.τ.

Au cours de l'étape (c), on calcule chaque réponse impulsionnelle hij(t) à partir d'un signal de corrélation entre le signal ei(t) émis au point i et le signal rj(t) capté au point j.

Dans l'exemple considéré ici, ce signal de corrélation vaut:

$$cij(t) = \int ei(\theta).rj(t-\theta)d\theta$$

(cette intégrale est faite par exemple sur une durée au moins égale à T, dont le début coïncide avec le début du signal rj(t)).

Avantageusement, ce signal de corrélation est fenêtré au moyen d'une fonction porte π(t) de largeur 1/δf (valant 1 pendant une période de 1/δf et 0 en dehors de cette période), auquel cas les réponses impulsionnelles hij (t) peuvent avantageusement être déterminées par la formule :

$$hij(t) = \Pi(t).cij(t) \quad .$$

On notera que, dans l'exemple particulier représenté sur le dessin et décrit ci-dessus, les points de réception j auxquels on capte l'onde acoustique sont confondus avec les points d'émission et constitués par les transducteurs T1-TN, mais les points de réception en question peuvent le cas échéant être constitués par un second réseau de transducteurs (non représenté), distinct du réseau de transducteurs T1-TN.

Dans le cas général, les ondes acoustiques qui sont générées par l'émission des signaux ei(t) sont donc captées en M points de réception, M étant un nombre entier non nul, lesquels M points de réception peuvent être soit confondus avec les N points d'émission (auquel cas M = N), soit non totalement confondus avec les points d'émission, soit entièrement distincts des points d'émission.

## Revendications

1. Procédé pour déterminer des réponses impulsionnelles d'un milieu (2) vis-à-vis de la transmission d'ondes entre différents points (T1-TN), procédé comprenant :

   (a) au moins une étape d'émission au cours de laquelle on émet des ondes dans le milieu (2) en générant des signaux ei(t) à partir d'un nombre N de points d'émission (T1-TN) appartenant au milieu, où N est un nombre entier au moins égal à 2 et i est un indice compris entre 1 et N qui désigne l'un desdits N points d'émission,

   (b) au moins une étape de réception au cours de laquelle on capte des signaux rj(t) à partir desdites ondes après transmission dans ledit milieu, en un nombre M de points de réception (T1-TN) appartenant au milieu, où M est un entier naturel non nul et j est un indice compris entre 1 et M qui désigne l'un desdits M points de réception,

   (c) et au moins une étape de détermination desdites réponses impulsionnelles hij(t) entre chaque point d'émission i et chaque point de réception j à partir des signaux émis ei(t) et captés rj(t),

   **caractérisé en ce qu'**au cours de l'étape (a), on fait émettre simultanément les signaux ei(t) par lesdits N points d'émission (T1-TN), ces signaux ei(t) ayant une durée T et étant chacun une somme de n signaux élémentaires sensiblement monochromatiques, de même amplitude et de fréquences respectives $f_{0,i}+k.\delta f$, où $f_{0,i}$ est une fréquence prédéterminée propre au point i, k est un nombre entier compris entre 0 et n, n est un nombre entier au moins égal à 2 et δf est un pas fréquentiel prédéterminé, les fréquences $f_{0,i}$ respectives propres aux différents points i étant distinctes et comprises dans une bande de fréquences de largeur δf,

   **et en ce qu'**au cours de l'étape (c), on calcule chaque réponse impulsionnelle hij(t) à partir d'un signal de corrélation entre le signal ei(t) émis au point i et le signal rj(t) capté au point j.

2. Procédé selon la revendication 1, dans lequel les fréquences $f_{0,i}$ respectives propres aux différents points i sont séparées deux à deux par un écart δf/N.

3. Procédé selon la revendication 1 ou la revendication 2, dans lequel au cours de l'étape (c), ledit signal de corrélation est fenêtré au moyen d'une fonction porte n(t) de largeur 1/δf.

4. Procédé selon la revendication 3, dans lequel au cours de l'étape (c), les réponses impulsionnelles hij (t) sont déterminées par la formule :

$$hij(t) = \Pi(t).\int ei(\theta-t).rj(\theta)d\theta \quad .$$

5. Procédé selon l'une quelconque des revendications précédentes, dans lequel les ondes transmises dans le milieu entre les points d'émission et les points de réception sont des ondes acoustiques.

6. Procédé selon l'une quelconque des revendications précédentes, dans lequel au cours de l'étape (a), le milieu où sont émises les ondes est réverbérant.

**7.** Procédé selon l'une quelconque des revendications précédentes, dans lequel le pas fréquentiel δf est inférieur ou égal à 1/τ, où τ est la dispersion temporelle du milieu.

**8.** Procédé selon la revendication 7, dans lequel le pas fréquentiel δf est sensiblement égal à 1/τ, où τ est la dispersion temporelle du milieu.

**9.** Procédé selon l'une quelconque des revendications précédentes, dans lequel la durée T est au moins égale à N/δf.

**10.** Procédé selon l'une quelconque des revendications précédentes, dans lequel la durée T est au moins égale à N.τ, où τ est la dispersion temporelle du milieu.

**11.** Procédé selon l'une quelconque des revendications précédentes, dans lequel les signaux élémentaires présentent des phases aléatoires.

**12.** Procédé selon l'une quelconque des revendications précédentes, dans lequel les ondes sont émises avec une certaine bande passante, les fréquences f0i comprennent une fréquence minimale f0 et le nombre n est déterminé pour que la bande de fréquence comprise entre f0 et f0+[(n+1).δf] recouvre sensiblement ladite bande passante.

**13.** Procédé selon l'une quelconque des revendications précédentes, dans lequel les points de réception sont confondus avec les points d'émission (T1-TN).

**Claims**

**1.** A method of determining impulse responses of a medium (2) in relation to the transmission of waves between different points (T1-TN), method comprising:

(a) at least one step of emission in the course of which waves are emitted into the medium (2) by generating signals ei(t) on the basis of a number N of emission points (T1-TN) belonging to the medium, where N is an integer at least equal to 2 and i is an index lying between 1 and N which designates one of said N emission points,

(b) at least one step of reception in the course of which signals rj(t) are picked up from said waves after transmission in said medium, at a number M of reception points (T1-TN) belonging to the medium, where M is a non-zero natural integer and j is an index lying between 1 and M which designates one of said M reception points,

(c) and at least one step of determination of said impulse responses hij(t) between each emission point i and each reception point j on the basis of the signals emitted ei(t) and picked up rj(t),

**characterized in that** in the course of step (a), said N emission points (T1-TN) are made to simultaneously emit the signals ei(t), these signals ei(t) having a duration T and each being a sum of n substantially monochromatic elementary signals, of like amplitude and of respective frequencies $f_{0,i}+k.δf$, where $f_{0,i}$ is a predetermined eigenfrequency at the point i, k is an integer lying between 0 and n, n is an integer at least equal to 2 and δf is a predetermined frequency interval, the respective eigenfrequencies $f_{0,i}$ at the various points i being distinct and lying in a frequency band of width δf,

and **in that** in the course of step (c), each impulse response hij (t) is calculated on the basis of a signal of correlation between the signal ei(t) emitted at the point i and the signal rj(t) picked up at the point j.

**2.** The method as claimed in claim 1, in which the respective eigenfrequencies $f_{0,i}$ at the various points i are separated pairwise by an offset δf/N.

**3.** The method as claimed in claim 1 or claim 2, in which, in the course of step (c), said correlation signal is windowed by means of a gate function π(t) of width 1/δf.

**4.** The method as claimed in claim 3, in which, in the course of step (c), the impulse responses hij(t) are determined through the formula:

$$hij(t) = \Pi(t) . \int ei(\theta - t) . rj(\theta)d\theta .$$

**5.** The method as claimed in any one of the preceding claims, in which the waves transmitted in the medium between the emission points and the reception points are acoustic waves.

**6.** The method as claimed in any one of the preceding claims, in which, in the course of step (a), the medium where the waves are emitted is reverberant.

**7.** The method as claimed in any one of the preceding claims, in which the frequency interval δf is less than or equal to 1/τ, where τ is the temporal dispersion of the medium.

**8.** The method as claimed in claim 7, in which the frequency interval δf is substantially equal to 1/τ, where T is the temporal dispersion of the medium.

**9.** The method as claimed in any one of the preceding claims, in which the duration T is at least equal to N/δf.

**10.** The method as claimed in any one of the preceding claims, in which the duration T is at least equal to N, τ, where τ is the temporal dispersion of the medium.

**11.** The method as claimed in any one of the preceding claims, in which the elementary signals exhibit random phases.

**12.** The method as claimed in any one of the preceding claims, in which the waves are emitted with a certain passband, the frequencies f0i comprise a minimum frequency f0 and the number n is determined so that the frequency band lying between f0 and f0+[(n+1).δf] substantially overlaps said passband.

**13.** The method as claimed in any one of the preceding claims, in which the reception points are coincident with the emission points (T1-TN).

**Patentansprüche**

**1.** Verfahren zum Bestimmen von Impulsantworten eines Mediums (2) bezüglich der Übertragung von Wellen zwischen unterschiedlichen Punkten (T1 - TN), mit:

(a) mindestens einem Schritt eines Aussendens, bei dem Wellen in das Medium (2) durch Erzeugen von Signalen ei(t) auf der Basis einer Anzahl N von zu dem Medium gehörenden Aussendepunkten (T1 - TN) ausgesendet werden, wobei N eine Ganzzahl mindestens gleich 2 ist und i ein Index ist, der zwischen 1 und N liegt und einen der N Aussendepunkte bezeichnet,
(b) mindestens einem Schritt eines Empfangens, bei dem Signale rj(t) nach einer Übertragung in das Medium aus den Wellen bei einer Anzahl M von zu dem Medium gehörenden Empfangspunkten (T1 - TN) aufgenommen werden, wobei M eine natürliche Ganzzahl ungleich Null ist, und j ein Index ist, der zwischen 1 und M liegt und einen der M Empfangspunkte bezeichnet, und
(c) mindestens einem Schritt eines Bestimmens der Impulsantworten hij(t) zwischen jedem Aussendungspunkt i und jedem Empfangspunkt j auf der Basis der ausgesendeten ei(t) und aufgenommenen rj(t) Signale,

**dadurch gekennzeichnet, dass**
in dem Schritt (a) die Signale ei(t) über die N Aussendepunkte (T1 - TN) simultan ausgesendet werden, wobei diese Signale ei(t) eine Dauer T aufweisen und wobei jedes eine Summe von n im Wesentlichen monochromatischen Elementarsignalen gleicher Amplitude und aus entsprechenden Frequenzen $f_{0,i}$+k.δf ist, wobei $f_{0,i}$ eine vorbestimmte Eigenfrequenz am Punkt i ist, k eine Ganzzahl zwischen 0 und n ist, wobei n mindestens gleich 2 ist, und δf ein vorbestimmtes Frequenzintervall ist, wobei die entsprechenden Eigenfrequenzen $f_{0,i}$ an den verschiedenen Punkten i unterschiedlich sind und in einem Frequenzband einer Breite δf liegen, und
in dem Schritt (c) jede Impulsantwort hij(t) auf der Basis eines Signals einer Korrelation zwischen dem an dem Punkt i ausgesendeten Signal ei(t) und dem an dem Punkt j aufgenommenen Signal rj(t) berechnet wird.

**2.** Verfahren gemäß Anspruch 1, wobei die entsprechenden Eigenfrequenzen $f_{0,i}$ an den verschiedenen Punkten i paarweise um einen Versatz δf/N abgegrenzt sind.

**3.** Verfahren gemäß Anspruch 1 oder 2, wobei in dem Schritt (c) das Korrelationssignal mit Hilfe einer Gate-Funktion n(t) einer Breite 1/δf in ein Fenster gebracht wird.

**4.** Verfahren gemäß Anspruch 3, wobei in dem Schritt (c) die Impulsantworten hij(t) durch die folgende Formel bestimmt werden:

$$hij(t) = \Pi(t) \cdot \int ei(\theta - t) \cdot rj(\theta)d\theta$$

**5.** Verfahren gemäß einem der vorhergehenden Ansprüche, wobei die in dem Medium zwischen den Aussendepunkten und den Empfangspunkten übertragenen Wellen Schallwellen sind.

**6.** Verfahren gemäß einem der vorhergehenden Ansprüche, wobei in dem Schritt (a) das Medium, aus dem die Wellen ausgesendet werden, zurückstrahlend ist.

**7.** Verfahren gemäß einem der vorhergehenden Ansprüche, wobei das Frequenzintervall δf kleiner oder gleich 1/τ ist, wobei τ die temporäre Distorsion des Mediums ist.

**8.** Verfahren gemäß Anspruch 7, wobei das Frequenzintervall δf im Wesentlichen gleich 1/τ ist, wobei τ die temporäre Distorsion des Mediums ist.

**9.** Verfahren gemäß einem der vorhergehenden Ansprüche, wobei die Dauer T mindestens gleich N/δf ist.

**10.** Verfahren gemäß einem der vorhergehenden Ansprüche, wobei die Dauer T mindestens gleich N·τ ist, wobei τ die temporäre Distorsion des Mediums ist.

**11.** Verfahren gemäß einem der vorhergehenden Ansprüche, wobei die elementaren Signale zufällige Phasen vorweisen.

**12.** Verfahren gemäß einem der vorhergehenden Ansprüche, wobei die Wellen mit einer bestimmtem Durchlassbreite ausgesendet werden, wobei die Frequenzen f0i eine Mindestfrequenz f0 aufweisen, und die Anzahl n derart bestimmt wird, dass das Frequenzband, das zwischen f0 und f0+[(n+1)].δf liegt, im Wesentlichen die Durchlassbreite überlappt.

**13.** Verfahren gemäß einem der vorhergehenden Ansprüche, wobei die Empfangspunkte mit den Aussendepunkten (T1-TN) übereinstimmen.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0232316 A

**Littérature non-brevet citée dans la description**

- **C. Prada ; M. Fink.** Eigenmodes of the time reversal operator: a solution to selective focusing in multiple-target media. *Wave Motion,* 1994, vol. 20, 151-163

- **C. Prada ; M. Fink.** Eigenmodes of the time reversal operator: a solution to sélective focusing in multiple-target media. *Wave Motion,* 1994, vol. 20, 151-163